# EUROPEAN PATENT APPLICATION

(11) **EP 3 006 702 A1**
(43) Date of publication of application: **13.04.2016**
(21) Application number: 15188812.0
(22) Date of filing: 07.10.2015
(51) Int. Cl.: F02D 41/00, F02D 41/02, F02D 41/14, F02D 41/40

(54) **INTERNAL COMBUSTION ENGINE AND CONTROL DEVICE THEREOF**

(30) Priority: 09.10.2014 JP 2014208244
(71) Applicant: Toyota Jidosha Kabushiki Kaisha, Toyota-shi, Aichi-ken 471-8571 (JP)
(72) Inventor: MATSUMOTO, Yosuke, TOYOTA-SHI, AICHI-KEN, 471-8571 (JP); ADACHI, Noriyasu, TOYOTA-SHI, AICHI-KEN, 471-8571 (JP); SAITO, Yusuke, TOYOTA-SHI, AICHI-KEN, 471-8571 (JP)
(74) Representative: Intès, Didier Gérard André

(57) **Abstract**

In an internal combustion engine provided with a turbocharger, a throttle valve, and a WGV, if there is a request for switching from stoichiometric combustion to lean combustion and also there is a request for raising a supercharging pressure after the switching of combustion higher than the supercharging pressure before the switching of combustion, the supercharging pressure reserve control for raising the supercharging pressure while a requested intake air amount S required for realizing a requested torque of the internal combustion engine in the stoichiometric combustion is maintained is executed by using the throttle valve and the WGV. After the supercharging pressure reserve control is finished, the switching of combustion is executed. When an actual supercharging pressure reaches the lower of a requested supercharging pressure L and a realizable supercharging pressure, the supercharging pressure reserve control is finished.

## Description

### Background of the invention

### Field of the Invention

The present invention relates to an internal combustion engine and a control device thereof, and more particularly relates to a control device of an internal combustion engine suitable as a device for controlling an internal combustion engine having a supercharger, and in which combustion is switched between first combustion having an air/fuel ratio at a stoichiometric air/fuel ratio or less, and lean combustion at an air/fuel ratio larger than the stoichiometric air/fuel ratio.

### Background Art

Conventionally, a control device of a diesel engine is disclosed in Japanese Patent Laid-Open No. 2006-291897, for example. According to this control device, in order to reduce NOx trapped by a NOx occlusion catalyst, rich combustion at an air/fuel ratio smaller than a stoichiometric air/fuel ratio is temporarily executed during lean combustion (i.e., at an air/fuel ratio larger than the stoichiometric air/fuel ratio). In addition, when a supercharging pressure needs to be raised at the time of switching from the rich combustion to the lean combustion, control for raising the supercharging pressure is executed before an intake air amount is increased.

In a spark ignition type internal combustion engine, such as a gasoline engine, in which an engine torque is controlled by adjusting the intake air amount, control for raising the supercharging pressure by collaborative control of a throttle valve and an actuator capable of adjusting the supercharging pressure before the intake air amount is increased as described in Japanese Patent Laid-Open No. 2006-291897 (hereinafter referred to as "supercharging pressure reserve control") is effective for a rapid change of the intake air amount at switching of the combustion. However, the supercharging pressure reserve control has the following problems.

That is, during the supercharging pressure reserve control, the throttle valve needs to be controlled to a closed side as compared with the case without the supercharging pressure reserve control so that the intake air amount is not increased with respect to a requested intake air amount corresponding to a requested torque in order to prevent the engine torque from changing with respect to the requested torque with an increase of the supercharging pressure. As a result, a pump loss of the internal combustion engine increases, which causes deterioration of fuel efficiency. Here, during the supercharging pressure reserve control, the supercharging pressure needs to be rapidly increased to a requested supercharging pressure required to realize the requested torque in the lean combustion after switching. However, since the throttle valve is controlled to the closed side for the reason mentioned above during the supercharging pressure reserve control, it is unlikely that the actual supercharging pressure can be raised to the requested supercharging pressure, such an increase depending on an operating region to be switched. Where raising the supercharging pressure with the requested supercharging pressure as a target value takes a long time, e.g., because the increase to the requested supercharging pressure is difficult, poor fuel efficiency can result.

### Summary of the Invention

The present invention was made in order to solve the above-described problem and has an object to provide a control device of an internal combustion engine capable of suppression of fuel efficiency deterioration caused by long duration supercharging pressure reserve control at switching of the combustion.

A control device of an internal combustion engine according to the present invention is configured to control an internal combustion engine provided with a supercharger, a throttle valve, and an actuator and includes reserve control executing means and combustion switching executing means. The supercharger includes a compressor arranged in an intake passage of the internal combustion engine and configured to supercharge intake air. The throttle valve is arranged in the intake passage on a downstream side from the compressor and is configured to adjust an intake air amount. The actuator is configured to control the supercharging pressure by adjustment of a driving force of the compressor. The reserve control executing means is configured to execute supercharging pressure reserve control in which, if there is a request for switching from a first combustion having an air/fuel ratio at a stoichiometric air/fuel ratio or less to lean combustion having an air/fuel ratio larger than the stoichiometric air/fuel ratio, and a request for raising the supercharging pressure after the switching to a pressure higher than the supercharging pressure before the switching of combustion, the supercharging pressure is raised while a requested intake air amount required for realizing a requested torque of the internal combustion engine in the first combustion is maintained, by using the throttle valve and the actuator. The combustion switching executing means executes the switching of combustion after the supercharging pressure reserve control is finished. The supercharging pressure reserve control is finished when an actual supercharging pressure reaches the lower of the requested supercharging pressure and a realizable supercharging pressure. The requested supercharging pressure is a supercharging pressure required for realizing the requested torque while the supercharging pressure reserve control is being executed in the lean combustion mode. The realizable supercharging pressure is a maximum supercharging pressure realizable by adjustment of the actuator under an actual intake air amount while the supercharging pressure reserve control is being executed.

The supercharger may be a turbocharger provided with a turbine arranged in an exhaust passage and configured to drive the compressor, together with the compressor. The actuator may be a waste gate valve configured to open/close an exhaust bypass passage, which bypasses the turbine.

The supercharger may be a turbocharger provided with a turbine arranged in the exhaust passage and driving the compressor and a variable nozzle for varying a flow rate of an exhaust gas flowing into the turbine, together with the compressor. The actuator may be the variable nozzle.

The supercharger may be a supercharger provided with a motor capable of driving the compressor. The actuator may be the motor.

According to the present invention, if there is a request for switching from the first combustion to the lean combustion and also there is a request for raising the supercharging pressure after the switching to a pressure higher than the supercharging pressure before the switching, the supercharging pressure reserve control for raising the supercharging pressure while maintaining the requested intake air amount required for realizing the requested torque in the first combustion is executed prior to the switching of the combustion. The supercharging pressure reserve control is finished when the actual surcharging pressure reaches the lower of the requested supercharging pressure and the realizable supercharging pressure. As a result, in a situation in which the requested supercharging pressure is higher than the realizable supercharging pressure, long duration supercharging pressure reserve control caused by inadvertent continuation of the requested supercharging pressure as the target supercharging pressure can be avoided. Thus, fuel efficiency can be improved.

### Brief Description of the Drawings

Fig. 1 is a schematic view for describing a system configuration of an internal combustion engine according to embodiments of the present invention;
Fig. 2 is a graph illustrating an example of a relationship between an engine operation region and a combustion method;
Fig. 3 is a graph illustrating a relationship between a NOx exhaust amount and an air/fuel ratio (A/F);
Fig. 4 is a view for describing a problem relating to switching from stoichiometric combustion to lean combustion;
Fig. 5A is a time chart illustrating an operation at switching from stoichiometric combustion to lean combustion accompanied by supercharging in comparison between presence and absence of supercharging pressure reserve control with respect to a case in which a target torque is constant;
Fig. 5B is a time chart illustrating an operation at switching from stoichiometric combustion to lean combustion accompanied by supercharging in comparison between presence and absence of supercharging pressure reserve control with respect to a case in which a target torque is constant;
Fig. 6A is a time chart illustrating operations at switching from stoichiometric combustion to lean combustion accompanied by supercharging in comparison between presence and absence of the supercharging pressure reserve control with respect to a case in which the target torque is increasing;
Fig. 6B is a time chart illustrating operations at switching from stoichiometric combustion to lean combustion accompanied by supercharging in comparison between presence and absence of the supercharging pressure reserve control with respect to a case in which the target torque is increasing;
Fig. 7 is a view for describing a problem when the supercharging pressure reserve control is used;
Fig. 8A is a view for describing a management method of end timing of the supercharging pressure reserve control;
Fig. 8B is a view for describing a management method of end timing of the supercharging pressure reserve control;
Fig. 9 is a view for describing an example of a calculation method of a realizable supercharging pressure; and
Fig. 10 is a flowchart of a routine executed according to embodiments of the present invention.

### Detailed Description of the Preferred embodiments

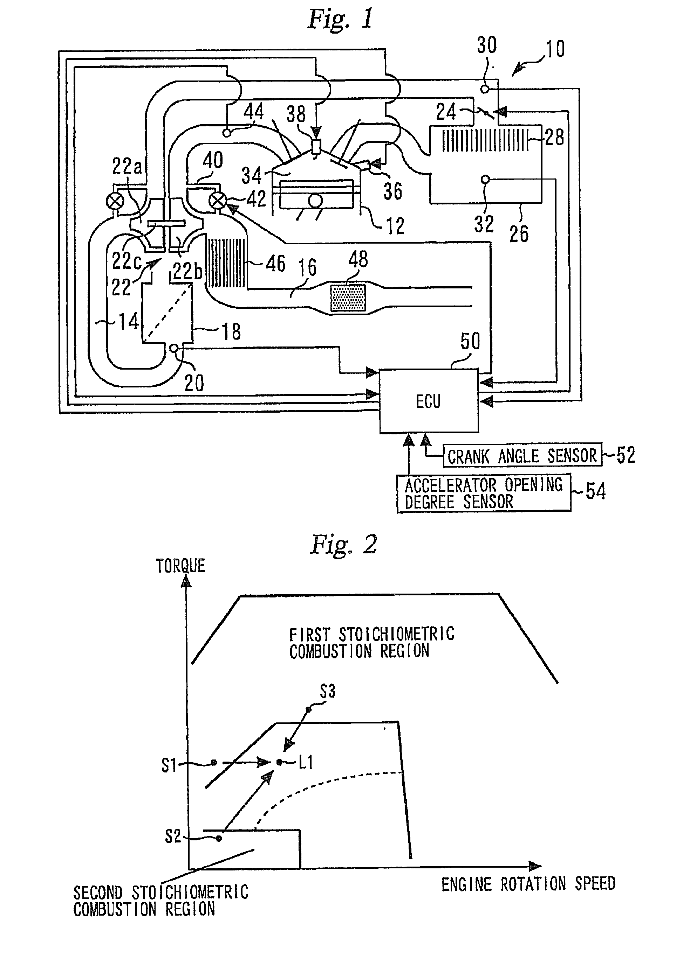

An embodiment of the present invention will be described by referring to Figs. 1 to 10.

### [Hardware configuration of internal combustion engine of embodiment]

Fig. 1 is a schematic view for describing a system configuration of an internal combustion engine 10 according to embodiments of the present invention. The internal combustion engine 10 illustrated in Fig. 1 includes an internal combustion engine body 12. The internal combustion engine 10 is a spark ignition type engine (gasoline engine, for example) mounted on a vehicle as its power source. An intake passage 14 and an exhaust passage 16 communicate with each of cylinders of the internal combustion engine body 12.

An air cleaner 18 is provided in the vicinity of an inlet of the intake passage 14. An air flow sensor 20 for outputting a signal according to a flow rate of air taken into the intake passage 14 is provided in the air cleaner 18. In the intake passage 14 on a downstream side from the air cleaner 18, a compressor 22a of a turbocharger 22 is arranged for supercharging intake air. The turbocharger 22 includes a turbine 22b operated by exhaust energy of an exhaust gas in the exhaust passage 16. The compressor 22a is integrally connected to the turbine 22b through a connecting shaft 22c and is rotated/driven by the exhaust energy of the exhaust gas input into the turbine 22b.

In the intake passage 14 on the downstream side from the compressor 22a, an electronically controlled throttle valve 24 for opening/closing the intake passage 14 is arranged. The intake passage 14 on the downstream side from the throttle valve 24 is constituted as an intake manifold 26 for distributing the intake air to each of the cylinders. In a collection portion of the intake manifold 26 (e.g., a surge tank), an intercooler 28 for cooling intake air compressed by the compressor 22a is arranged. Between the compressor 22a and the throttle valve 24 in the intake passage 14, a first intake pressure sensor 30 for measuring a throttle upstream pressure, i.e., a supercharging pressure is arranged. In the intake manifold 26, a second intake pressure sensor 32 is arranged for measuring a throttle downstream pressure, i.e., an intake manifold pressure.

In each cylinder, a fuel injection valve 36 for directly injecting fuel into a combustion chamber 34 and an ignition plug 38 for igniting a mixture in the combustion chamber 34 are provided. As the fuel injection valve for supplying the fuel into the combustion chamber 34, a fuel injection valve for injecting the fuel into each of intake ports may be used instead of the fuel injection valve 36 or together with the same.

To the exhaust passage 16, an exhaust bypass passage 40 bypassing the turbine 22b is connected. In the exhaust bypass passage 40, a waste gate valve (WGV) 42 is arranged as a bypass valve for opening/closing the exhaust bypass passage 40. The WGV 42 is electrically powered as an example and is configured to be adjustable to an arbitrary opening degree within a predetermined opening degree control range. By changing an opening degree of the WGV 42, a flow rate of the exhaust gas passing through the turbine 22b can be adjusted so as to adjust a driving force of the compressor 22a.

Moreover, in the exhaust passage 16 on an upstream side from the turbine 22b, an air/fuel ratio sensor 44 for detecting an air/fuel ratio of the exhaust gas is arranged. In the exhaust passage 16 on the downstream side from the air/fuel ratio sensor 44, various catalysts for purifying the exhaust gas are arranged. Here, a three-way catalyst 46 and an NSR catalyst (occlusion reduction NOx catalyst) 48 are provided as an example in order from the upstream side of the exhaust gas.

Moreover, the system of this embodiment includes an ECU (Electronic Control Unit) 50. The ECU 50 includes at least an input/output interface, a memory, and a central processing unit (CPU). The input/output interface is provided for receiving sensor signals from various sensors mounted on the internal combustion engine 10 or a vehicle having the same mounted and for outputting operation signals to various actuators provided on the internal combustion engine 10. The sensors from which the ECU 50 receives the signals include various sensors for obtaining an engine operation state such as a crank angle sensor 52 for obtaining a rotation position of a crank shaft and an engine rotation speed and the like in addition to the above-described air flow sensor 20, the intake pressure sensors 30 and 32, and the air/fuel ratio sensor 44. The sensors also include an accelerator opening-degree sensor 54 for detecting a step amount (accelerator opening degree) on an accelerator pedal of the vehicle on which the internal combustion engine 10 is mounted. The actuators to which the ECU 50 outputs the operation signals include various actuators for controlling engine operations such as the above-described throttle valve 24, the fuel injection valve 36, an ignition device (not shown) using the ignition plug 38, and the WGV 42 and the like. The memory stores various control programs, maps and the like for controlling the internal combustion engine 10. The CPU reads out the control programs and the like from the memory, executes them and generates the operation signals for the various actuators on the basis of the received sensor signals.

### [Engine torque control to be based]

In engine torque control in the system of this embodiment, a requested torque is calculated in accordance with the accelerator opening degree, and the engine toque is controlled using the calculated requested torque as a target torque. More specifically, when the requested torque is calculated, a requested intake air amount required for realizing the requested torque under a current air/fuel ratio (requested value of an air amount to be taken into the cylinder) is calculated. In the case of the internal combustion engine 10, the intake air amount can be adjusted by using the throttle valve 24 and the WGV 42. In a torque range on a low load side, the intake air amount is adjusted so that the requested intake air amount can be obtained by opening-degree adjustment of the throttle valve 24 up to a state in which the opening degree of the WGV 42 is open at a maximum opening degree within an opening-degree control range. Then, in a torque range on a high load side higher than an engine torque at which the throttle valve 24 reaches a full-opening degree (i.e., a supercharged region), a supercharging pressure is adjusted by the opening-degree adjustment of the WGV 42 so that a requested supercharging pressure satisfying the requested intake air amount can be obtained in a state in which the throttle valve 24 is opened at a full-open opening degree, whereby adjustment is made so that the intake air amount in the supercharged region becomes the requested intake air amount. In notation of requested values (target values) of the intake air amount and the supercharging pressure in the following description, a value in stoichiometric combustion is given "S" at the end, while a value assuming lean combustion or a value in the lean combustion is given "L" at the end. An ignition timing is assumed to be controlled basically to MBT ignition timing according to the air/fuel ratio.

### [Switching of combustion]

Fig. 2 is a graph illustrating an example of a relationship between an engine operation region and a combustion method. The engine operation region illustrated in Fig. 2 is regulated by an engine torque (engine load) and an engine rotation speed. The engine operation region includes a lean combustion region using an air/fuel ratio larger (leaner) than a stoichiometric air/fuel ratio. The lean combustion region roughly corresponds to a region with a low-to-medium load and low-to-medium rotational speed. On a high-load and high-rotational speed side from the lean combustion region, a first stoichiometric combustion region using a stoichiometric air/fuel ratio is provided. Also, on a low-load and low-rotational speed side from the lean combustion region, [JAB1]a second stoichiometric combustion region using the stoichiometric air/fuel ratio is provided. The second stoichiometric combustion region is a region where the stoichiometric air/fuel ratio is used in order to avoid unstable combustion when lean combustion is performed in this region.

The high-load side region in the lean combustion region is set as a supercharging lean combustion region. The supercharging lean combustion region is a region requiring supercharging in order to realize the engine torque in this region with the lean combustion. The second stoichiometric combustion region is a region not requiring supercharging, while the first stoichiometric combustion region includes a sub-region requiring supercharging and a sub-region not requiring supercharging, though these sub-regions are not shown.

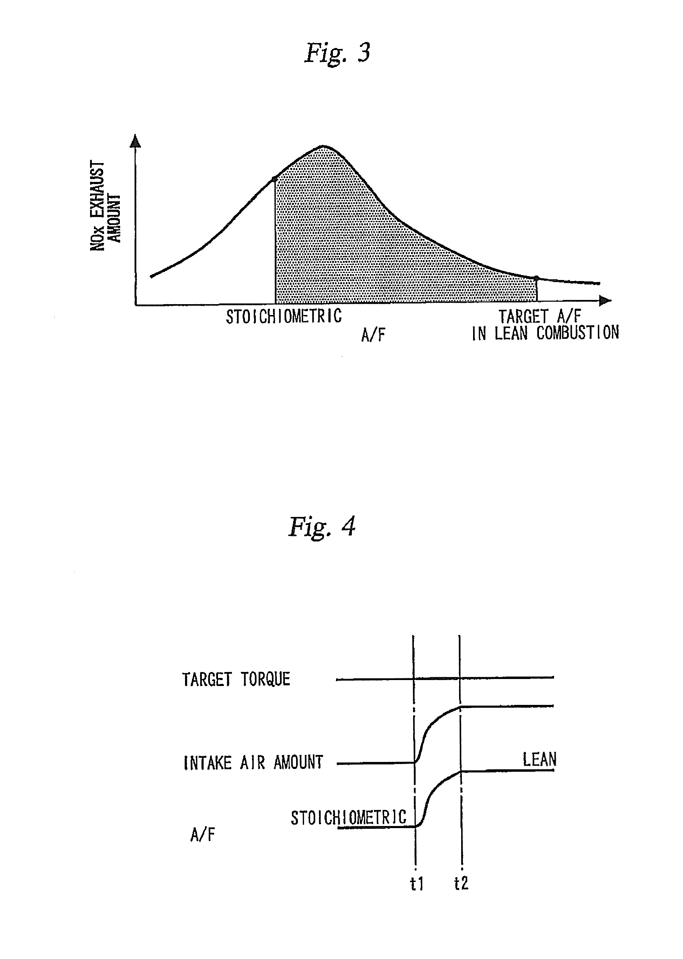

Fig. 3 is a graph illustrating a relationship between a NOx exhaust amount and an air/fuel ratio (A/F). As illustrated in Fig. 3, the NOx exhaust amount from the combustion chamber 34 has a peak at an air/fuel ratio (approximately 16) slightly larger than the stoichiometric air/fuel ratio and has a characteristic of decreasing as the air/fuel ratio goes beyond the peak and becomes large. In the system of this embodiment, a value at a level at which the NOx exhaust amount becomes sufficiently small (that is, a value larger than a value within the air/fuel ratio range (approximately 16 to 20) at which the NOx exhaust amount becomes relatively large) is used as a target air/fuel ratio used in the lean combustion region as illustrated in Fig. 3.

Fig. 4 is a view for describing a problem relating to switching from the stoichiometric combustion to the lean combustion. Fig. 4 is a control example when the target torque of the internal combustion engine is constant. Time t1 is a point of time when a request for switching from the stoichiometric combustion to the lean combustion is received, and the switching is started. Time t2 is a point in time when the switching to the lean combustion is completed. As in the example illustrated in Fig. 4, in order to realize the same engine torque as in the stoichiometric combustion during the lean combustion, an air amount to be taken into the cylinder needs to be increased. Thus, when the time t1 comes, either one of or both of the throttle valve 24 and the WGV 42 are used so as to increase the intake air amount to the air amount required for realizing the target torque in the lean combustion. Then, in accordance with this change in the intake air amount, the air/fuel ratio is changed to a predetermined target lean air/fuel ratio in the lean combustion from the stoichiometric air/fuel ratio.

Here, in a case that the intake air amount needs to be increased, and the stoichiometric combustion is to be switched to the lean combustion, if after the switching, the lean combustion region is a region not requiring supercharging, the intake air amount can be adjusted by the throttle valve 24. In this case, the intake air amount can be adjusted with relatively high responsiveness. On the other hand, if the supercharging pressure needs to be increased at the time of switching to the lean combustion, supercharging pressure adjustment using the WGV 42 is required in order to change the intake air amount to a requested intake air amount L. In this case, the WGV 42 is controlled to a closed side so as to increase the rotation speed of the turbine 22b and to raise the supercharging pressure and thus, responsiveness of the intake air amount becomes relatively poorer as compared with the adjustment using the throttle valve 24. If a period of time required for switching from the stoichiometric combustion to the lean combustion (time from t1 to t2 in Fig. 4) becomes long, a duration of combustion at the air fuel ratio resulting in high NOx emissions (air/fuel ratio close to 16 to 20) is increased as a result of the switching. Then, the NOx exhaust amount increases.

Cases in which the supercharging pressure needs to be raised at the time of switching to the lean combustion include the following cases, described in reference to Fig. 2. That is, a case of transition from a point S1 in the first stoichiometric combustion region to a point L1 in a supercharging lean combustion region corresponds to the above-described case. That is, in this case, since the same engine torque as the value at the point S1 needs to be realized at the point L1 in the lean combustion, the supercharging pressure needs to be raised. Moreover, the case of transition from a point S2 in the second stoichiometric combustion region to the point L1 also corresponds to the above-described case. This case frequently occurs during actual engine operations. Since this case is switching from the stoichiometric combustion not accompanied by supercharging to the supercharged lean combustion, supercharging is necessary. The case in which the supercharging pressure needs to be raised at the time of switching to the lean combustion is not limited to a case in which there is a request for raising the engine torque as described above. That is, even if a request of lowering the engine torque is issued as in a case of transition from a point S3 to the point L1, the intake air amount required for realizing the engine torque at the point L1 after the switching in the lean combustion might be larger than the intake air amount required for realizing the engine torque at the point S3 before the switching in the stoichiometric combustion. Such a case corresponds to the case in which the supercharging pressure needs to be raised at the time of switching to the lean combustion, even if lower engine torque is requested.

### (Supercharging pressure reserve control)

As described above, if time required for switching from the stoichiometric combustion to lean combustion becomes long, there is a problem that the NOx exhaust amount increases. Thus, in this embodiment, if there is a request for switching of combustion from stoichiometric combustion to lean combustion and also a request for raising the supercharging pressure after switching of the combustion to a pressure greater than the supercharging pressure before the switching, supercharging pressure reserve control is executed prior to switching of the air/fuel ratio in order to reduce the switching time. The supercharging pressure reserve control in this case is control for raising the supercharging pressure to the requested supercharging pressure L required for realizing the requested torque in lean combustion by collaborative control of the throttle valve 24 and the WGV 42 while the requested intake air amount S required for realizing the requested torque in the stoichiometric air/fuel ratio before combustion switching is maintained.

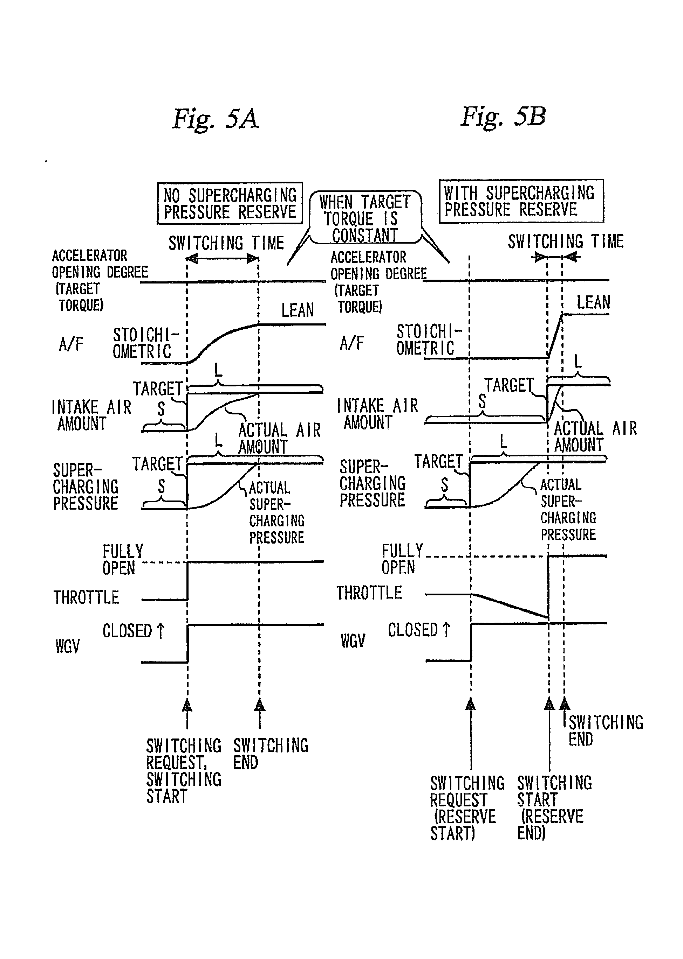

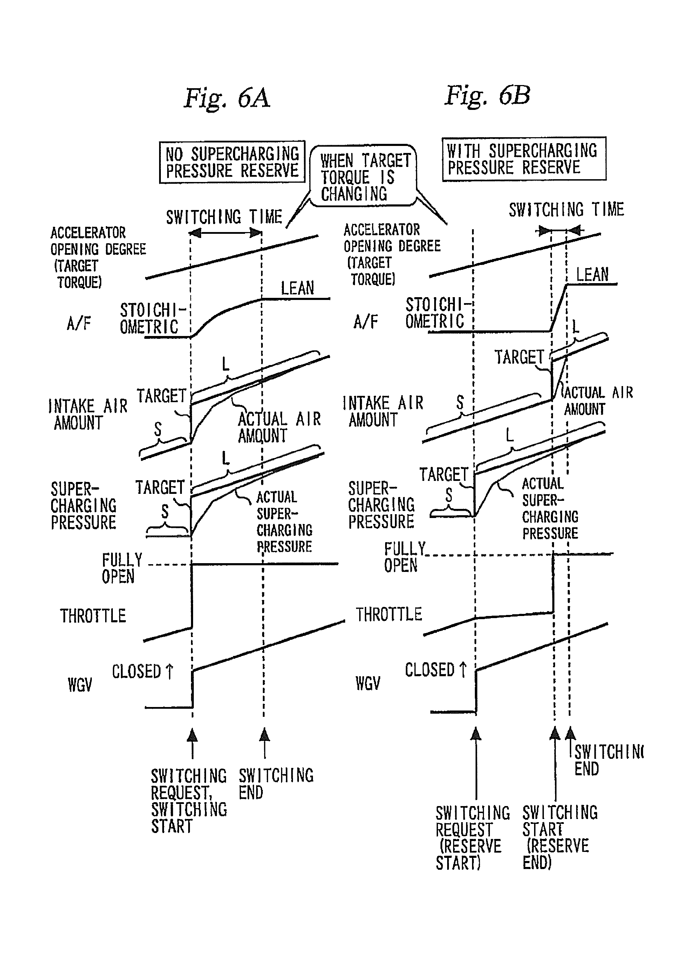

Figs. 5A and 5B are time charts illustrating an operation at the time of switching from stoichiometric combustion to lean combustion with supercharging in comparison between presence and absence of the supercharging pressure reserve control with respect to a case in which a target torque is constant. The example illustrated in Figs. 5A and 5B corresponds to a situation of transition from the point S1 to the point L1 on the premise that the point S1 in Fig. 2 is an operation point in a natural intake region, for example. In Figs. 5A and 5B (also in Figs. 6A, 6B, 7, 8A and 8B which will be described later), a target value (requested value) of each parameter is indicated by a bold line and an actual value deviated from the target value is indicated by a thin line.

In the case without the supercharging pressure reserve control, as illustrated in Fig. 5A, switching of the combustion, that is, switching of the air/fuel ratio is started immediately at a point in time when a combustion switching request is made. Specifically, a requested intake air amount L required for realizing the target torque corresponding to the requested torque based on the accelerator opening degree in the lean combustion after the switching is calculated as a target intake air amount L. Since the lean combustion after switching in this case is accompanied by supercharging, the requested supercharging pressure L required for realizing the target intake air amount L in a state in which the throttle valve 24 is fully open is calculated as the target supercharging pressure L. Then, at the time of switching start, the throttle opening degree is controlled to a full-open opening degree. The WGV opening degree is controlled to an opening degree corresponding to the target supercharging pressure L. With that, the intake air amount rises toward the target intake air amount L. The air/fuel ratio during switching is changed as a fuel injection amount is adjusted so that a value for maintaining the target torque is obtained under the changing actual intake air amount. As described above, if the supercharging pressure reserve control is not executed, the air/fuel ratio is changed while the intake air amount is increased by raising the supercharging pressure, and thus, time is required also for switching of the air/fuel ratio since the rise of the actual supercharging pressure requires time. As a result, the NOx exhaust amount during the switching increases.

On the other hand, as illustrated in Fig. 5B, the supercharging pressure reserve control is executed prior to the switching of the air/fuel ratio at the point in time when the switching request is made. Specifically, in the example in Fig. 5B, since the target torque is constant, the supercharging pressure is raised so that the target supercharging pressure (requested supercharging pressure) L is obtained in a state in which the target intake air amount is constant at the value S in the stoichiometric combustion. Setting of the target supercharging pressure L illustrated in Fig. 5B is similar to the case not accompanied by the supercharging pressure reserve control illustrated in Fig. 5A.

When the supercharging pressure reserve control accompanies, the control of the WGV opening degree is similar to control without the supercharging pressure reserve control, but the control of the throttle opening degree is different. That is, the throttle opening degree is reduced with a rise in the supercharging pressure so that an air amount passing through the throttle (and moreover, an in-cylinder intake air amount) is not changed with the rise of the supercharging pressure. The air amount passing through the throttle, a throttle upstream pressure (supercharging pressure), and a throttle downstream pressure have a known relationship with the throttle opening degree. By using this relationship, the throttle opening degree is controlled so that the air amount passing through the throttle at start of the switching can be maintained in a situation in which the actual supercharging pressure rises while pressures prior to and subsequent to the throttle is measured by using the intake pressure sensors 30 and 32.

In the example illustrated in Fig. 5B, at the point in time when the actual supercharging pressure becomes the target supercharging pressure L by the supercharging pressure reserve control, the supercharging pressure reserve control is completed, and the air/fuel ratio switching operation is started. Specifically, the throttle valve 24 is fully opened in a state in which the actual supercharging pressure is rising to the target supercharging pressure L, and the actual air/fuel ratio is switched to the target air/fuel ratio in the lean combustion. The air/fuel ratio during switching is changed by adjusting the fuel injection amount so as to become the value for maintaining the target torque under the changing actual intake air amount. As a result, as compared to the case not accompanied by the supercharging pressure reserve control, the intake air amount can be raised rapidly, and thus, the air/fuel ratio can be switched rapidly[JAB2]. As a result, a period of time during which the air/fuel ratio with high NOx exhaust amount (air fuel ratio close to 16 to 20) is used is reduced, whereby an increase of the NOx exhaust amount associated with switching of the combustion can be suppressed. The WGV opening degree during the supercharging pressure reserve control, here, is assumed to be controlled to the opening degree corresponding to the target supercharging pressure L. However, the WGV opening degree during the supercharging pressure reserve control may be changed to an opening degree corresponding to the target supercharging pressure L in accordance with the subsequent rise of the actual supercharging pressure after being controlled to a minimum opening degree at start of the control in order to rapidly raise the actual supercharging pressure instead[JAB3].

Figs. 6A and 6B are time charts illustrating operations at switching from stoichiometric combustion to lean combustion accompanied by supercharging in comparison between presence and absence of the supercharging pressure reserve control with respect to a case in which the target torque is increasing. An example illustrated in Figs. 6A and 6B corresponds to a case in which, in a course in which the target torque slowly increases as the accelerator opening degree is slowly increased, the stoichiometric combustion region is switched to the supercharged lean combustion region.

As illustrated in Fig. 6A, a basic idea of the control without the supercharging pressure reserve control is similar to the case with the constant target torque illustrated in Fig. 5A. However, the target intake air amount L is increased in correspondence with the increase of the target torque even after the start of the switching, and the target supercharging pressure L is increased so as to become a value required for realizing the target intake air amount L in a state in which the throttle opening degree is a full-open opening degree. As described above, when the target torque increases, if the supercharging pressure reserve control is not executed, the air/fuel ratio is changed while the intake air amount is increased and the supercharging pressure is raised. Thus, the NOx exhaust amount during the switching increases similarly to the case with the constant target torque.

As illustrated in Fig. 6B, the basic idea of the control with the supercharging pressure reserve control is similar to the case of the constant target torque illustrated in Fig. 5B. However, the target intake air amount S during the supercharging pressure reserve control is increased so as to remain at a value required for realizing the increasing target torque in stoichiometric combustion, following the increase of the target torque. The setting method of the target supercharging pressure (requested supercharging pressure) L is similar to the case without the supercharging pressure reserve control illustrated in Fig. 6A. The throttle opening degree during the supercharging pressure reserve control is controlled to be a value required for maintaining the air amount passing through the throttle corresponding to the target intake air amount S in a situation in which the actual supercharging pressure and the actual intake air amount rise by using the above-described known relationship. Moreover, as illustrated in Figs. 6A and 6B, the throttle opening degree during increase of the actual supercharging pressure toward the target supercharging pressure L is controlled to be a closed side as compared with the case without the supercharging pressure reserve control when the supercharging pressure reserve control is executed. In the example illustrated in Fig. 6B described above, the throttle valve 24 is fully opened at the point of time when the actual supercharging pressure reaches the target supercharging pressure L by the supercharging pressure reserve control in stoichiometric combustion. As a result, the air/fuel ratio can be switched rapidly, and thus, the increase of the NOx exhaust amount associated with switching of the combustion can be suppressed.

### (Problem when supercharging pressure reserve control is used)

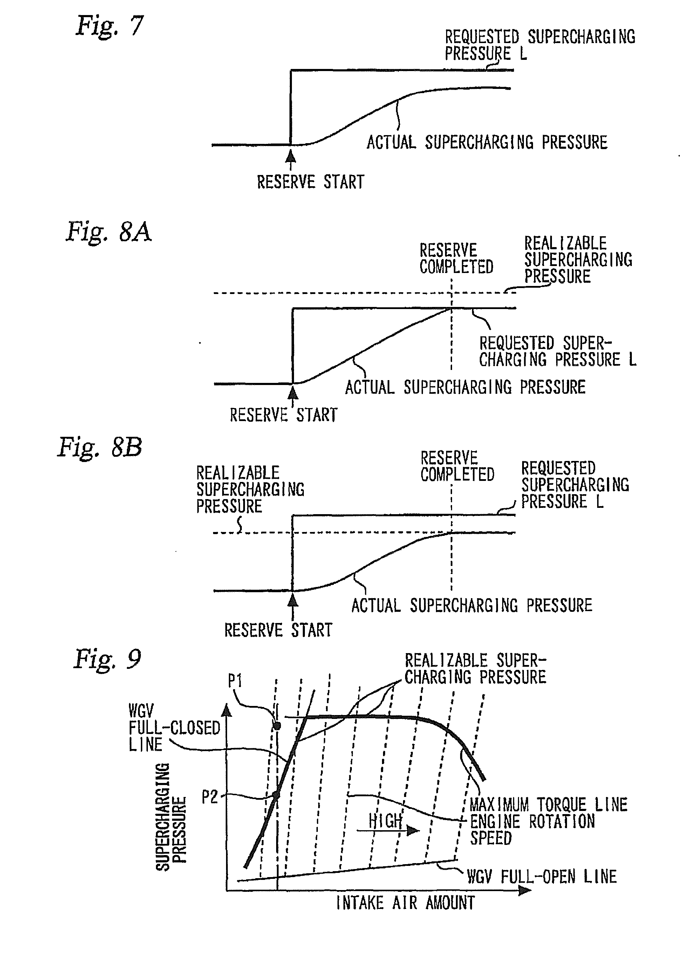

Fig. 7 is a view for describing a problem when the supercharging pressure reserve control is used. During execution of the supercharging pressure reserve control, as in the examples illustrated in Figs. 5B and 6B, the actual supercharging pressure needs to be raised to the target supercharging pressure L corresponding to the requested supercharging pressure L determined by the requested torque. However, it is likely that the pressure cannot be raised actually to the requested supercharging pressure L by using the supercharging pressure reserve control as is shown in the example illustrated in Fig. 7, depending on the operation region to be switched. This is because, during execution of the supercharging pressure reserve control, it is necessary that the actual intake air amount is adjusted so as to match the requested intake air amount S corresponding to the requested torque by controlling the throttle valve 24 to the closed side as compared with the case without the supercharging pressure reserve control so that the engine torque is not changed with respect to the requested torque (target torque) with the increase of the actual supercharging pressure. Thus, during execution of the supercharging pressure reserve control, the exhaust gas flow rate passing through the turbine 22b decreases and the actual supercharging pressure cannot be raised easily as compared with the case without the supercharging pressure reserve control.

Extended duration of the operation of raising the actual supercharging pressure while the requested supercharging pressure L is kept at the target supercharging pressure L, regardless of the situation in which the pressure cannot be raised easily to the requested supercharging pressure L, results in operation with less fuel efficiency for a long time. The reasons for that include an increased pump loss caused by the supercharging pressure reserve control and long performance of the stoichiometric combustion regardless of the request of switching from stoichiometric combustion to lean combustion.

### (Management method of end timing of featured supercharging pressure reserve control in embodiment)

Figs. 8A and 8B are views for describing a management method of end timing of the supercharging pressure reserve control. In order to solve the above-described problem, in this embodiment, the requested supercharging pressure and a realizable supercharging pressure are prepared as threshold values of the supercharging pressure for determining the end timing of the supercharging pressure reserve control. The supercharging pressure reserve control is finished when the actual supercharging pressure reaches the lower of the requested supercharging pressure and the realizable supercharging pressure during execution of the supercharging pressure reserve control, and then, the switching of the air/fuel ratio is executed. The "requested supercharging pressure" here refers to the requested supercharging pressure L required for realizing the requested torque during the supercharging pressure reserve control in lean combustion accompanied by supercharging, as described above. The "realizable supercharging pressure" refers to a maximum supercharging pressure realizable by opening-degree adjustment of the WGV 42 under the current actual intake air amount during execution of the supercharging pressure reserve control (i.e., while stoichiometric combustion is being performed).

Fig. 8A illustrates a control example in a situation in which the realizable supercharging pressure is higher than the requested supercharging pressure L and corresponds to the control example illustrated in Fig. 5B. In this case, the supercharging pressure reserve control is finished when the actual supercharging pressure reaches the requested supercharging pressure L. On the other hand, Fig. 8B illustrates a control example in a situation in which the requested supercharging pressure L is higher than the realizable supercharging pressure. In this case, the supercharging pressure reserve control is finished when the actual supercharging pressure reaches the realizable supercharging pressure. The control examples illustrated in Figs. 8A and 8B show that the supercharging pressure reserve control is finished when the actual supercharging pressure reaches the lower of the requested supercharging pressure L and the realizable supercharging pressure. However, the requested supercharging pressure L and the realizable supercharging pressure can be calculated as the same value. In this Description, the expression "when the actual supercharging pressure reaches the lower of the requested supercharging pressure L and the realizable supercharging pressure" is assumed to include a case in which the actual supercharging pressure reaches a supercharging pressure value equal to the requested supercharging pressure L and the realizable supercharging pressure in a situation in which the requested supercharging pressure L and the realizable supercharging pressure are the same value.

As described above, in this embodiment, not only the case in which the realizable supercharging pressure is higher than the requested supercharging pressure L (Fig. 8A) but also the case in which the requested supercharging pressure L is higher than the realizable supercharging pressure (Fig. 8B) is assumed, and the end timing of the supercharging pressure reserve control is controlled. As a result, extended execution of the supercharging pressure reserve control caused by the situation where the requested supercharging pressure L higher than the realizable supercharging pressure is inadvertently kept at the target supercharging pressure L can be avoided. Moreover, if only the realizable supercharging pressure is used for determination of the end timing of the supercharging pressure reserve control, the actual supercharging pressure is unnecessarily raised to the realizable supercharging pressure higher than the requested supercharging pressure L in the case illustrated in Fig. 8A. In response to that, according to the determination method of the end timing in this embodiment, the supercharging pressure reserve control can be executed properly in accordance with the individual situations. As a result, at the time of switching from stoichiometric combustion to lean combustion accompanied by supercharging, NOx exhaust amount can be suppressed while deterioration of fuel efficiency is suppressed by using the supercharging pressure reserve control. Moreover, even if the requested supercharging pressure L is higher than the realizable supercharging pressure, the supercharging pressure reserve control is executed until the realizable supercharging pressure is reached. As a result, in this case too, time required for switching of the air/fuel ratio can be reduced as compared with the case where execution of the supercharging pressure reserve control is not carried out.

The example illustrated in Figs. 8A and 8B is the case in which the requested supercharging pressure L and the actual intake air amount are constant when the target torque, during execution of the supercharging pressure reserve control, is constant. If the actual intake air amount is constant, as will be described below with regard to Fig. 9, the realizable supercharging pressure is also constant. On the other hand, if the target torque changes during execution of the supercharging pressure reserve control, the requested supercharging pressure L and the realizable supercharging pressure are updated on the basis of the target torque at each point in time during the period when the target torque is changing. The case in which the target torque changes during execution of the supercharging pressure reserve control corresponds not only to the case in which the target torque increases in the supercharged lean combustion region, as in the control example illustrated in Fig. 6, but also the case in which the target toque decreases in the supercharged lean combustion region.

### (Calculation method of realizable supercharging pressure)

Fig. 9 is a view for describing an example of a calculation method of a realizable supercharging pressure. Fig. 9 illustrates the realizable supercharging pressure by using a relationship between the supercharging pressure and the intake air amount. Moreover, Fig. 9 illustrates a relationship of the combustion being executed (i.e., stoichiometric combustion) during execution of the supercharging pressure reserve control. The supercharging pressure on the vertical axis indicates a value corresponding to a standard state.

By controlling the WGV opening degree from a maximum opening degree to a minimum opening degree within a predetermined opening-degree control range, the supercharging pressure can be adjusted within the range from a WGV full-open line to a WGV full-closed line in Fig. 9. Moreover, a line representing the maximum torque that can be output from the internal combustion engine 10 in view of the operating parameters can be expressed as a relationship of as the parameters illustrated in Fig. 9. On a high air flow-rate side above an intersection between the WGV full-closed line and the maximum torque line, the maximum torque (torque limit) is determined when the WGV 42 is opened wider than the full-closed opening degree (minimum opening degree) by restriction of an exhaust temperature of the internal combustion engine 10 and the like. Therefore, in the air flow-rate region at the intersection or below, a value on the WGV full-closed line becomes the realizable supercharging pressure, while on the high air flow-rate side from the intersection, the value on the maximum torque line becomes the realizable supercharging pressure. Therefore, by using the relationship illustrated in Fig. 9, the realizable supercharging pressure can be calculated by using the value of the supercharging pressure at a point corresponding to the current actual intake air amount (value in stoichiometric combustion) from the lines indicated by bold lines in Fig. 9. As described above, during execution of the supercharging pressure reserve control, it is required that the requested supercharging pressure L required for realizing the target torque in the lean combustion after the combustion switching is calculated and then, this requested supercharging pressure L is required to be realized in stoichiometric combustion. Therefore, the value of the requested supercharging pressure L calculated by assuming the lean combustion might be calculated as a value like the point P1, for example, higher than the realizable supercharging pressure (point P2) under the same conditions on the graph in Fig. 9, in which the relationship in stoichiometric combustion is determined.

### (Specific processing in embodiment)

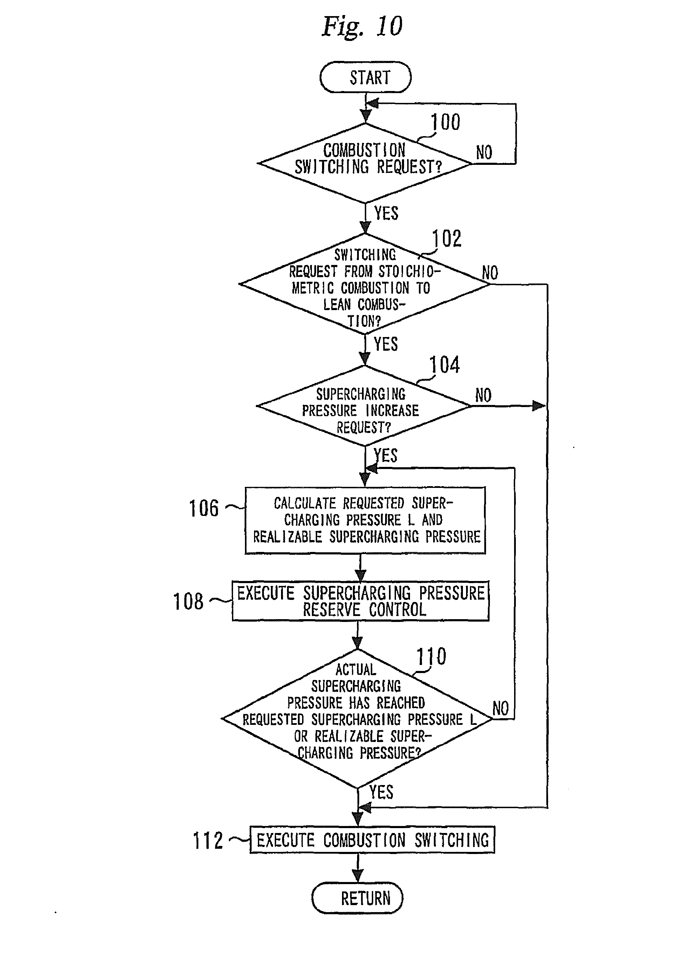

Fig. 10 is a flowchart illustrating a control routine executed by the ECU 50 in order to realize the featured control in the embodiment of the present invention.

In the routine illustrated in Fig. 10, first, at Step 100, the ECU 50 determines whether or not a request for combustion switching has been made. More specifically, the ECU 50 stores a relationship regulating a combustion method used in each of the operation regions (see Fig. 2) as a map. Then, by comparing the combustion method used in the current operation region and a combustion method in the requested operation region corresponding to the current requested torque (target torque) calculated on the basis of the accelerator opening degree, it is determined whether or not switching of the combustion is requested. Moreover, even if there is no change in an operation point on the operation region, when the lean combustion is prohibited and stoichiometric combustion is used, for example, if the prohibition is released and switching from stoichiometric combustion to lean combustion is enabled, it is also determined that there is a request for combustion switching.

If the determination at Step 100 is satisfied, the ECU 50 proceeds to Step 102 and determines whether or not the current switching request is a request for switching from stoichiometric combustion to lean combustion. That is, if the combustion method used in the current operation region is stoichiometric combustion and the requested combustion method is lean combustion, the determination at Step 102 is satisfied. If the determination at Step 102 is not satisfied, that is, if the request is made for switching from lean combustion to stoichiometric combustion or for switching from stoichiometric combustion to lean combustion with natural intake, the ECU 50 proceeds to Step 112 and immediately executes a predetermined switching operation.

If the determination at Step 102 is satisfied, the ECU 50 proceeds to Step 104 and determines whether or not there is a request for raising the supercharging pressure after switching of the combustion to a value higher than the supercharging pressure before switching of the combustion. More specifically, the requested intake air amount L required for satisfying the current requested torque under the target air/fuel ratio in the requested lean combustion is calculated. Then, it is determined whether or not the calculated requested intake air amount L is larger than the current actual intake air amount, and also larger than a predetermined threshold value. If the determination is satisfied, the determination at Step 104 is satisfied. The threshold value is a value set in advance as a threshold value for determining whether or not the requested intake air amount L is a value which needs supercharging.

If the determination at Step 104 is not satisfied, that is, if switching from stoichiometric combustion to lean combustion is requested, but the supercharging pressure does not have to be raised, the ECU 50 proceeds to Step 112 and immediately executes the predetermined switching operation.

On the other hand, if the determination at Step 104 is satisfied, that is, if there is a request for switching from stoichiometric combustion to lean combustion while the supercharging pressure is being raised, the ECU 50 proceeds to Step 106 and calculates the requested supercharging pressure L and the realizable supercharging pressure. The requested supercharging pressure L is calculated as a value required for realizing the requested intake air amount L calculated at Step 104 in the state in which the throttle valve 24 is at the full-open opening degree. More specifically, the ECU 50 stores a map (not shown) determining the relationship between the requested intake air amount L and the requested supercharging pressure L in the lean combustion, and the requested supercharging pressure L is calculated by referring to such a map. Regarding the realizable supercharging pressure, by storing the relationship illustrated in Fig. 9 (relationship based on the stoichiometric combustion) as a map in the ECU 50, it can be calculated on the basis of the current actual intake air amount by referring to the map. If the target torque is constant prior to and subsequent to switching of the combustion, as in the control example illustrated in Fig. 5B, a value calculated at start (when the routine proceeds from Step 104 to Step 106) of the supercharging pressure reserve control can be used continuously as the requested supercharging pressure L and the realizable supercharging pressure during execution of the supercharging pressure reserve control. On the other hand, if the target torque changes during execution of the supercharging pressure reserve control, as in the control example illustrated in Fig. 6B, the requested supercharging pressure L and the realizable supercharging pressure are updated by processing at Step 106 to values based on the latest requested intake air amount L and actual intake air amount corresponding to the changing target torque, respectively.

Subsequently, the ECU 50 proceeds to Step 108 and executes the supercharging pressure reserve control. More specifically, the latest requested intake air amount S and the requested supercharging pressure L are used as the target intake air amount S and the target supercharging pressure L during the supercharging pressure reserve control, respectively. Moreover, the throttle valve 24 and the WGV 42 are controlled so as to have the opening degrees for realizing the target intake air amount S and the target supercharging pressure L. A control method of the throttle valve 24 and the WGV 42 in this case is described by referring to Fig. 5B and Fig. 6B.

Subsequently, the ECU 50 proceeds to Step 110 and determines whether or not the actual supercharging pressure has reached the lower of the requested supercharging pressure L and the realizable supercharging pressure. As a result, if this determination is not satisfied, the ECU 50 returns to Step 106, and if the target torque is changing, the requested supercharging pressure L and the realizable supercharging pressure are updated, and the supercharging pressure reserve control is continued at Step 108. On the other hand, if the determination at this Step 110 is satisfied, the ECU 50 proceeds to Step 112.

At Step 112, the combustion switching operation is executed. More specifically, if the ECU 50 has proceeded to Step 112 via Step 110, the combustion switching operation accompanied by the end operation of the supercharging pressure reserve control is executed. The processing for finishing the supercharging pressure reserve control corresponds to processing for switching the target intake air amount from the target intake air amount S for the stoichiometric combustion to the target intake air amount L for the lean combustion and processing for fully opening the throttle valve 24 with this switching. This target intake air amount L may be a value calculated at Step 104 if the target torque is constant, but if the target torque is changing, it is a value required for realizing the target torque at the current point in time during the lean combustion.

Moreover, at Step 112, as the fuel injection amount is changed in accordance with the actual intake air amount changing with the operation of the throttle valve 24, the air/fuel ratio is switched toward the target air/fuel ratio in the lean combustion.

In the above-described embodiment, the actual supercharging pressure is raised by using the requested supercharging pressure L as the target supercharging pressure L during the supercharging pressure reserve control, and the supercharging pressure reserve control is finished if the actual supercharging pressure reaches the lower of the requested supercharging pressure L and the realizable supercharging pressure. However, the supercharging pressure reserve control in the present invention may be executed as follows. That is, the ECU 50 may calculate the requested supercharging pressure L and the realizable supercharging pressure at Step 106, and then determine which of the calculated requested supercharging pressure L and realizable supercharging pressure is lower. Then, the ECU 50 may use the requested supercharging pressure L, if the requested supercharging pressure L is lower, as the target supercharging pressure during the supercharging pressure reserve control, while it may use the realizable supercharging pressure if the realizable supercharging pressure is lower. Moreover, the ECU 50 may finish the supercharging pressure reserve control when the actual supercharging pressure reaches the target supercharging pressure, which is the requested supercharging pressure L or the realizable supercharging pressure.

Moreover, in the above-described embodiment, the control in which the supercharging pressure reserve control is executed prior to switching from stoichiometric combustion to lean combustion accompanied by supercharging is described as an example. However, the "first combustion" to be switched from the first combustion to the lean combustion in the present invention is not limited to stoichiometric combustion, but may be the rich combustion at an air/fuel ratio smaller than the stoichiometric air/fuel ratio. A specific example of such switching from rich combustion to lean combustion corresponds to a case in which, after rich combustion is temporarily executed during the lean combustion mode in order to reduce NOx trapped by the NSR catalyst 48, a request is made for raising the supercharging pressure when the combustion returns from rich combustion to lean combustion.

Moreover, in the above-described embodiment, the example in which the supercharging pressure reserve control is executed by collaborative control of the throttle valve 24 and the WGV 42 is described. However, the actuator used with the throttle valve for execution of the supercharging pressure reserve control in the present invention is not limited to the WGV 42, as long as it can control the supercharging pressure by adjusting the driving force of the compressor. That is, the actuator may be a variable nozzle in the case of an internal combustion engine including a turbocharger having a variable nozzle which can vary a flow rate of an exhaust gas flowing into a turbine. Moreover, the actuator may be a motor in the case of an internal combustion engine including a supercharger having a motor capable of driving the compressor, for example.

More specifically, when the supercharging pressure reserve control by collaborative control of the throttle valve 24 and the WGV 42 is to be executed, the throttle opening degree during the increase of the actual supercharging pressure toward the target supercharging pressure L is controlled to the closed side as compared with the case where supercharging pressure reserve control is not executed see Figs. 5A, 5B, 6A, and 6B). Then, the WGV 42 during the supercharging pressure reserve control is controlled to the closed side in order to raise the actual supercharging pressure to the target supercharging pressure L (see Figs. 5A, 5B, 6A, and 6B). If the variable nozzle or the motor is used instead of the WGV 42, control of the throttle opening degree in execution of the supercharging pressure reserve control is the same as the use of the WGV 42. Moreover, the opening degree of the variable nozzle during execution of the supercharging pressure reserve control is controlled to the closed side in order to raise the actual supercharging pressure to the target supercharging pressure L. Moreover, power supplied to the motor during execution of the supercharging pressure reserve control is increased in order to raise the actual supercharging pressure to the target supercharging pressure L. If the variable nozzle is used instead of the WGV 42, a relationship in which the line relating to the WGV 42 illustrated in Fig. 9 is replaced by a line relating to the variable nozzle may be provided as a map in the ECU 50. Moreover, if the motor is used instead of the WGV 42, a map determining the realizable supercharging pressure in a relationship with an intake air amount, considering a compressor surge or the like, may be provided in the ECU 50.

In the above-described embodiment, the "reserve control executing means" in the present invention is realized by execution of the processing at Step 108 by the ECU 50 until the determination at Step 110 is satisfied, and the "combustion switching executing means" in the present invention is realized by execution of the processing at Step 112 by the ECU 50 when the determination at Step 110 is satisfied.

## Claims

1. A control device for an internal combustion engine, the internal combustion engine comprising:
a supercharger (22) including a compressor (22a) arranged in an intake passage (14) of the internal combustion engine and configured to supercharge intake air;
a throttle valve (24) arranged in the intake passage (14) on a downstream side from the compressor (22a) and configured to adjust an intake air amount; and
an actuator (42) configured to control a supercharging pressure by causing adjustment of a driving force of the compressor (22a),
the control device **characterized by** comprising:
reserve control executing means configured to execute supercharging pressure reserve control in which, if there is a request for switching from a first combustion having an air/fuel ratio at a stoichiometric air/fuel ratio or less, to lean combustion having an air/fuel ratio larger than the stoichiometric air/fuel ratio, and a request for raising the supercharging pressure after the switching to a pressure higher than the supercharging pressure before the switching, the supercharging pressure is raised while a requested intake air amount required for realizing a requested torque of the internal combustion engine in the first combustion is maintained, by using the throttle valve (24) and the actuator (42); and
combustion switching executing means for executing the switching of combustion after the supercharging pressure reserve control is finished,
wherein the supercharging pressure reserve control is finished when an actual supercharging pressure reaches the lower of the requested supercharging pressure and a realizable supercharging pressure,
the requested supercharging pressure is a supercharging pressure required for realizing the requested torque while the supercharging pressure reserve control is being executed during the lean combustion, and
the realizable supercharging pressure is a maximum supercharging pressure realizable by adjustment of the actuator (42) under an actual intake air amount while the supercharging pressure reserve control is being executed.

2. The control device of an internal combustion engine according to claim 1, wherein
the supercharger (22) includes a turbine (22b) arranged in an exhaust passage (16) and configured to drive the compressor (22a), and
the actuator is a waste gate valve (42) configured to open and close an exhaust bypass passage (40) which bypasses the turbine (22b).

3. The control device of an internal combustion engine according to claim 1, wherein
the supercharger (22) includes
a turbine (22b) arranged in an exhaust passage (16) and configured to drive the compressor (22a), and
a variable nozzle for varying a flow rate of an exhaust gas flowing into the turbine (22b),
wherein
the actuator is the variable nozzle.

4. The control device of an internal combustion engine according to claim 1, wherein
the supercharger (22) includes a motor capable of driving the compressor (22a), and
the actuator is the motor.
the realizable supercharging pressure is a maximum supercharging pressure realizable by adjustment of the actuator under an actual intake air amount while the supercharging pressure reserve control is being executed.
